# EUROPÄISCHE PATENTSCHRIFT

(11) **EP 4 067 587 B1**
(45) Veröffentlichungstag und Bekanntmachung des Hinweises auf die Patenterteilung: **21.01.2026**
(21) Anmeldenummer: 22165150.8
(22) Anmeldetag: 29.03.2022
(51) Int. Cl.: E03C 1/33, B25B 27/00, B62B 1/00

(54) **MONTAGEVORRICHTUNG**
MOUNTING DEVICE
DISPOSITIF DE MONTAGE

(30) Priorität: 30.03.2021 DE 102021108059
(43) Veröffentlichungstag der Anmeldung: 05.10.2022
(73) Patentinhaber: Käfer, Wladimir, 49324 Melle (DE)
(72) Erfinder: Käfer, Wladimir, 49324 Melle (DE); Ellrich, Marco, 49324 Melle (DE)
(74) Vertreter: Wischmeyer, André

(56) Entgegenhaltungen:
- DE-U1- 202016 006 698
- US-A- 3 247 588
- US-A- 3 268 994
- US-B1- 6 591 468

## Beschreibung

Die Erfindung betrifft eine Montagevorrichtung zur Montage von Einrichtungsgegenständen. Insbesondere betrifft die Erfindung eine Montagevorrichtung zur Montage von Sanitär- und Kücheneinrichtungsgegenständen wie Waschbecken und Unterbauspülen.

Die Montage von Unterbauspülen und Waschbecken erfordert bisher einen großen Personal- sowie Kraftaufwand. Typische Unterbauspülen und Waschbecken haben ein Eigengewicht von bis zu 30 kg, das bei der Montage regelmäßig von zumindest einem Monteur zu tragen ist, während ein weiterer Monteur die Unterbauspüle bzw. das Waschbecken befestigt.

Dokument US3247588A offenbart eine Montagevorrichtung mit einem Tragelement, das an einer Gewindestange festgehalten werden kann und dabei schwenkbar und aussermittig zur Gewindestange angeordnet ist.

Der Erfindung liegt die Aufgabe zugrunde, eine Montagevorrichtung sowie ein Montagesystem mit der Montagevorrichtung zu schaffen, die den zur Montage von Einrichtungsgegenständen nötigen Aufwand reduziert und eine sichere Montage ermöglicht.

Erfindungsgemäß wird die Aufgabe durch eine Montagevorrichtung gemäss Anspruch 1 gelöst.

Die erfindungsgemäße Montagevorrichtung erleichtert insbesondere das Anheben und Halten der zu montierenden Einrichtungsgegenstände in ihre/r Montageposition. Die geringere radiale Erstreckung des Tragelementes in der ersten Stellung ermöglicht es, das Tragelement von oben durch eine Abflussöffnung, durch die bei späterer Benutzung des Einrichtungsgegenstandes Abwasser in eine anzuschließende Abwasserleitung gelangt, des zu montierenden Einrichtungsgegenstandes hindurchzuführen. Anschließend kann das Tragelement in die zweite Stellung überführt werden, in der es nicht mehr durch die Abflussöffnung hindurchzuführen ist. Sobald das Tragelement von unten an dem Einrichtungsgegenstand anliegt führt ein Anheben des Tragelementes insbesondere zusammen mit dem Längselement zu einem Anheben des Einrichtungsgegenstandes, welches so bis in die Montageposition zu führen ist.

Zur Erleichterung des Anhebens lässt sich das Stützelement vor dem Anheben oberhalb des Einrichtungsgegenstandes positionieren, wobei das Längselement insbesondere in vertikaler Richtung durch den gesamten Einrichtungsgegenstand hindurchreicht. Durch das Stützelement lässt sich die Montagevorrichtung sowie der Einrichtungsgegenstand an einem zur gewünschten Montageposition ortsfesten Element etwa des Gebäudes, in dem der Einrichtungsgegenstand zu montieren ist, abstützen und der Einrichtungsgegenstand durch eine Verschiebung des Stützelementes relativ zum Längselement in die Längsrichtung und auf das Tragelement zu anheben. Dadurch lässt sich der Einrichtungsgegenstand durch nur einen Monteuranheben und ohne Kraftaufwand halten.

Das Längselement hat entlang der Längsrichtung insbesondere einen zumindest im Wesentlichen gleichbleibenden Querschnitt. Insbesondere hat das Längselement einen bezogen auf die Längsmittelachse zumindest im Wesentlichen rotationssymmetrischen Querschnitt. Die Längsrichtung ist parallel zur Längsmittelachse. Das Längselement hat insbesondere eine Länge von zumindest 40 cm, bevorzugt von zumindest 50 cm, besonders bevorzugt von genau 52 cm und insbesondere einen Durchmesser von höchstens 30, bevorzugt von höchstens 20, besonders bevorzugt von genau 16 mm.

Das Tragelement ist derart am Längselement angeordnet, dass eine aus Richtung des Stützelementes auf das Tragelement in der zweiten Stellung wirkende Kraft auf das Längselement übertragen wird. Bevorzugt wird durch die Kraft eine Überführung des Tragelementes in die erste Stellung selbständig verhindert und/oder es notwendigerweise in der zweiten Stellung gehalten. Vorzugsweise liegt das Tragelement zumindest in einer der Stellungen unmittelbar am Längselement an und/oder ist mittels eines Hilfsmittels am Längselement angeordnet. Das Tragelement und/oder das Längselement sind/ist bevorzugt zumindest im Wesentlichen formstabil und/oder aus einem Metall ausgebildet.

Das Stützelement steht in bezogen auf die Längsmittelachse radialer Richtung von dem Längselement ab. Bevorzugt erstreckt sich das Längselement durch eine durchgehende Ausnehmung in dem Stützelement hindurch. Erfindungsgemäss ist der Abstand des Tragelementes von dem Stützelement in der ersten Stellung geringer als in der zweiten Stellung, wenn das Stützelement ortsfest zum Längselement verbleibt.

Erfindungsgemäss ist das Tragelement schwenkbar um eine Tragelementschwenkachse am Längselement gelagert. Hierzu weist das Längselement und/oder das Tragelement bevorzugt eine zur Längsmittelachse rechtwinklige Bohrung auf, durch oder in die sich insbesondere ein Lagerelement, insbesondere eine Schraube, ein Stift oder ein Zapfen, erstreckt. Eine derartige Lagerung des Tragelementes am Längselement ist konstruktiv einfach umzusetzen und erhöht somit die Zuverlässigkeit der Montagevorrichtung.

Das Tragelement ist bevorzugt um zumindest 45°, besonders bevorzugt um zumindest 60°, weiter bevorzugt um zumindest 70° relativ zum Längselement um die Tragelementschwenkachse schwenkbar. Insbesondere ist es aus der zweiten Stellung um in die erste Stellung und/oder zurück um den genannten Winkel schwenkbar. Hierdurch lässt sich die auf die Längsmittelachse bezogene radiale Erstreckung des Tragelementes in einem besonders weiten Umfang variieren und damit die Montagevorrichtung für Einrichtungsgegenstände mit unterschiedlich großen Abflussöffnungen sicher einsetzen.

Erfindungsgemäss hat das Tragelement einen Schwerpunkt, der von der Tragelementschwenkachse und von der Längsmittelachse beabstandet ist. Dies gilt insbesondere zumindest in der zweiten Stellung. Dadurch wird erreicht, dass das Tragelement sich bei einer zumindest im Wesentlichen vertikalen Orientierung des Längselementes automatisch in der ersten Position anordnet und dadurch einfach durch Abflussöffnungen hindurchzuführen ist. In die zweite Stellung ist das Tragelement daraufhin auf einfache Weise insbesondere dadurch überführbar, dass das Längselement innerhalb der Abflussöffnung in die radiale Richtung bewegt wird, in der eine in der ersten Stellung nach oben verschwenkte Seite des Tragelementes von dem Längselement absteht und anschließend nach oben bewegt wird, wodurch die Seite sich an den Einrichtungsgegenstand anlegt und bei einer weiteren Bewegung des Längselementes nach oben das Tragelement vom Einrichtungsgegenstand in die zweite Stellung überführt wird.

Bevorzugt ist eine Erstreckung des Tragelementes in eine zur Längsmittelachse rechtwinklige erste Richtung zumindest in der zweiten Stellung mindestens eineinhalbfach, bevorzugt mindestens zweifach, besonders bevorzugt mindestens zweieinhalbfach, optimaler Weise dreifach so groß wie eine Erstreckung des Tragelementes in eine zur Längsmittelachse und zur ersten Richtung rechtwinklige zweite Richtung. Insbesondere erstreckt sich die Tragelementschwenkachse in die zweite Richtung. Durch eine derartig längliche Ausbildung des Tragelementes lässt sich der Effekt der Veränderung dessen, wie weit das Tragelement in den unterschiedlichen Stellungen von der Längsmittelachse absteht, besonders einfach umsetzen.

Bevorzugt erstreckt sich das Tragelement von der Tragelementschwenkachse aus in die erste Richtung zumindest im Wesentlichen so weit, wie es sich entgegengesetzt zur ersten Richtung von der Tragelementschwenkachse erstreckt. **In** die zweite Richtung erstreckt sich das Tragelement insbesondere um höchstens 7, bevorzugt um höchstens 6, besonders bevorzugt um höchstens 5 cm, um problemlos durch unterschiedliche Abflussöffnungen führbar zu sein. Zugunsten einer hinreichenden Stabilität beträgt eine Dicke des Tragelementes bevorzugt 10 mm.

Vorzugsweise umgibt das Tragelement das Längselement auf zwei gegenüberliegenden Seiten. Insbesondere schneidet die Tragelementschwenkachse bei einer Betrachtung der Montagevorrichtung in die Längsrichtung zunächst einen Teil des Tragelementes, dann das Längselement und anschließend einen weiteren Teil des Tragelementes, wobei das ggf. vorhandene Lagerelement hier unbeachtet bleibt. Hierdurch ist eine zuverlässigere Kraftübertragung von dem Tragelement auf das Längselement ermöglicht. Bevorzugt umgibt das Tragelement das Längselement bzw. die Längsmittelachse voll umfänglich. Insbesondere weist das Tragelement eine durchgehende Ausnehmung auf, durch die sich das Längselement hindurch erstreckt. Diese Ausnehmung ist bevorzugt in der zweiten Stellung rechtwinklig zur Tragelementschwenkachse bzw. in die erste Richtung länglich. Insofern ist die Ausnehmung bevorzugt ein Langloch. Dieses ermöglicht eine Verschwenkung des Tragelementes bei einem einfachen konstruktiven Aufbau und einem geringen Abstand des Tragelementes vom Längselement im Bereich der Tragelementschwenkachse.

Das Tragelement weist bevorzugt eine Kontaktfläche zur Anlage an den zu montierenden Einrichtungsgegenstand auf. Zumindest in der zweiten Stellung ist die Kontaktfläche zumindest teilweise dem Stützelement zugewandt. Vorzugsweise ist die Kontaktfläche durch ein nachgiebiges Material ausgebildet. Das Material ist insbesondere Teil des Tragelementes. Bei diesem Material handelt es sich insbesondere um ein Elastomer oder eine Textilie wie Filz, die als Schicht auf einen insbesondere unnachgiebigen und/oder härteren Körper des Tragelementes aufgetragen ist. Hierdurch wird ein Zerkratzen der Unterseite des Einrichtungsgegenstandes, an dem das Trageelement während der Montage anliegt, verhindert, ohne die Stabilität des Tragelementes zu gefährden.

Vorzugsweise ist die Kontaktfläche zumindest abschnittsweise gekrümmt. Insbesondere hat die Kontaktfläche einen sich in der zweiten Stellung zur Längsmittelachse rechtwinklig erstreckenden, zumindest bereichsweise ebenen ersten Kontaktflächenabschnitt und/oder einen sich in der zweiten Stellung zur Längsmittelachse um weniger als 90° angewinkelt oder parallel erstreckenden, zumindest abschnittsweise ebenen zweiten Kontaktflächenabschnitt. Insbesondere sind die genannten Kontaktflächenabschnitte mittels eines bei einer Betrachtung des Tragelementes in Richtung der Tragelementschwenkachse gekrümmt sichtbaren Zwischenabschnittes miteinander verbunden. Hierdurch gehen die genannten Kontaktflächenabschnitte insbesondere stufen- und kantenlos ineinander über. Insbesondere ist der erste Kontaktflächenabschnitt zum zweiten Kontaktflächenabschnitt zumindest um den Winkel angewinkelt, um den das Tragelement aus der zweiten Stellung in die erste Stellung schwenkbar ist. Dadurch wird erreicht, dass der Einrichtungsgegenstand auch dann nicht zerkratzt wird, wenn das Tragelement, wie vorbeschrieben, in seiner ersten Stellung von unten an den Einrichtungsgegenstand angelegt wird und passiv, wie vorbeschrieben, durch den Einrichtungsgegenstand und ein Hochziehen des Längselementes in die zweite Stellung überführt wird.

Bevorzugt ist die Tragelementschwenkachse zwischen dem Schwerpunkt des Tragelementes und dem zweiten Kontaktflächenabschnitt angeordnet. Insbesondere hat das Tragelement nur einen zweiten Kontaktflächenabschnitt und keinen auf der gegenüberliegenden Seite an den ersten Kontaktflächenabschnitt anschließenden Kontaktflächenabschnitt. Das nachgiebige Material erstreckt sich auf der von dem zweiten Kontaktflächenabschnitt abgewandten Seite bzw. Hälfte des Tragelementes insbesondere ausschließlich eben. Durch diese Ausbildung lässt sich durch die abschnittsweise gekrümmte, d. h. abgerundete Kontaktfläche eine gewünschte Positionierung des Schwerpunktes erreichen, ohne die Tragelementschwenkachse außermittig zwischen den beiden sich gegenüberliegenden Längsenden des Tragelementes anordnen zu müssen.

Vorzugsweise ist zwischen dem Längselement und dem Stützelement eine Stellvorrichtung angeordnet. Durch die Stellvorrichtung lässt sich das Stützelement relativ zum Längselement verstellen, insbesondere zumindest unter anderem, bevorzugt ausschließlich verschieben. Erfindungsgemäss lässt sich das Stützelement relativ zum Längselement in die Längsrichtung verschieben. Die Stellvorrichtung ist dabei zur Vermeidung von Reibung bevorzugt so ausgebildet, dass die Verschiebung nicht mit einer Rotation des Stützelementes und/oder der Stellvorrichtung relativ zum Längselement einhergeht. Die Stellvorrichtung ist insofern zwischen dem Längselement und dem Stützelement angeordnet, als es zur Erzeugung einer zwischen dem Längselement und dem Stützelement wirkenden Kraft ausgebildet ist. Dabei muss die Stellvorrichtung insbesondere nicht vollständig in räumlicher Hinsicht zwischen dem Längselement und dem Stützelement angeordnet sein.

Die Stellvorrichtung umfasst bevorzugt zumindest ein manuell, elektrisch, pneumatisch und/oder hydraulisch anzutreibendes Stellelement. Das Stellelement ist vorzugsweise bezogen auf die Längsmittelachse axial zum Stützelement versetzt am Längselement angeordnet. Das Stellelement hat bevorzugt ein Stellinnengewinde, das mit einem insbesondere selbsthemmenden Außengewinde, das bevorzugt metrisch ist, kämmt. Das Längselement weist bevorzugt ein/das Außengewinde auf. Alternativ weist das Längselement bevorzugt kein Gewinde auf. In diesem Fall ist seine über die Länge insbesondere einheitliche Querschnittsfläche bevorzugt nicht punktsymmetrisch ausgebildet. Bevorzugt ist die Stellvorrichtung oder das Stellelement ortsfest oder einstückig oder einteilig mit dem Stützelement ausgebildet oder davon getrennt. Eine dem Tragelement zugewandte Oberfläche des Stützelementes ist bevorzugt punktsymmetrisch oder länglich ausgeformt.

Das Längselement ist insbesondere zumindest in dem Abschnitt, über den sich das Stützelement und/oder das Stellelement bewegen lassen, vorzugsweise über die gesamte Länge, als Gewindestange ausgebildet. Das Stellelement hat insbesondere die Form einer Mutter oder einer Gewindehülse mit einer in einem zur Längsmittelachse rechtwinkligen Querschnitt sechseckigen Außenkontur. Bevorzugt weist das Längselement ein metrisches 16 mm-Gewinde auf und ist das Stellelement mittels eines Schraubenschlüssels mit einer 24er Schlüsselweite zu drehen. Alternativ oder zusätzlich weist das Stellelement bevorzugt zumindest einen sich von der Längsachse nach außen erstreckenden Hebel auf. Besonders bevorzugt ist das Stellelement als Flügelmutter mit zumindest zwei sich gegenüberliegenden Flügeln oder Hebeln ausgebildet.

Die Stellvorrichtung ist bevorzugt zu einer lösbaren formschlüssigen oder kraftschlüssigen Festlegung, insbesondere Klemmung, des Längselementes ausgebildet. Dazu weist die Stellvorrichtung besonders bevorzugt zumindest zwei im Betrieb zur Festlegung gegenüberliegend am Längselement anliegende Kontaktelemente aufweist. Für die kraftschlüssige Festlegung ist eine sich in die Längsrichtung erstreckende Mantelfläche des Längselementes insbesondere glatt. Für die formschlüssige Festlegung weist das Längselement insbesondere in die Längsrichtung versetzte Ausformungen wie z.B. Zähne auf. Auf diese Weise der Festlegung lassen sich die Nachteile einer Rotation wirksam verhindern.

Die Stellvorrichtung weist bevorzugt ein Stellvorrichtungsgehäuse auf, das insbesondere einen ersten Haltegriff umfasst. Ferner weist die Stellvorrichtung bevorzugt einen beweglich, insbesondere schwenkbar um eine zur Längsmittelachse bevorzugt angewinkelte oder windschiefe Handgriffschwenkachse, am Stellvorrichtungsgehäuse gelagerten ersten Betätigungsgriff auf. Die Stellvorrichtung ist bevorzugt derart ausgebildet, dass eine Bewegung des ersten Betätigungsgriffes relativ zum Stellvorrichtungsgehäuse im Betrieb die Verschiebung des Stützelementes relativ zum Längselement bewirkt. Ferner ist die Stellvorrichtung bevorzugt derart ausgebildet, dass mit einer anschließenden entgegengesetzten Bewegung bzw. einem Lösen des ersten Betätigungsgriffes relativ zum Stellvorrichtungsgehäuse im Betrieb keine Relativbewegung zwischen dem Längselement und dem Stützelement bzw. der Stellvorrichtung einhergeht. Auf diese Weise lässt sich das Längselement mittels einer alternierenden Bewegung des ersten Betätigungsgriffes allmählich über eine größere Distanz verschieben, ohne dass es sich unbeabsichtigt zurückverschiebt. Die Stellvorrichtung ist bevorzugt nach Art einer Klemmzwinge, einer Einhandzwinge oder einer Leimzwinge ausgebildet.

Die Stellvorrichtung weist bevorzugt einen weiteren Betätigungsgriff auf, der derart ausgebildet ist, dass seine Bewegung relativ zum Stellvorrichtungsgehäuse eine Verschieblichkeit des Stützelementes relativ zum Längselement entgegen der Längsrichtung freigibt. So lässt sich das Längselement nach einer Verschiebung über eine größere Distanz (s.o.) wieder ausziehen und für den nächsten Einsatz der Montagevorrichtung vorbereiten.

Der erste Betätigungsgriff und/oder der weitere Betätigungsgriff sind/ist insbesondere mit einem Rückstellelement, insbesondere einer Feder, verbunden. Dieses stellt die/den Betätigungsgriff in eine Ausgangsstellung zurück, von der aus er zu betätigen ist.

Vorzugsweise hat das Stützelement ausgehend von der Längsmittelachse eine Erstreckung in eine radiale Richtung, die mindestens doppelt so groß, bevorzugt zumindest drei Mal so groß, besonders bevorzugt zumindest fünf Mal so groß ist wie eine Erstreckung des Längselementes in die radiale Richtung. Insbesondere ist das Stützelement das Längselement in tangentialer Richtung umschließend und bevorzugt rotationssymmetrisch bezogen auf die Längsmittelachse ausgebildet. Durch diese Ausbildung lässt sich eine zuverlässige Abstützung per unterschiedlichen Montagebedingungen sicherstellen.

Das Stützelement ist bevorzugt zumindest teilweise, insbesondere vollständig, aus einem Kunststoff, bevorzugt aus einem thermoplastischen Kunststoff, besonders bevorzugt aus Polyethylen ausgebildet. Hierdurch ist das Stützelement besonders reibfest und nutzt auch bei einer Relativbewegung zu am Stützelement anliegenden Elementen, insbesondere zum Stellelement, kaum ab.

In einer vorteilhaften Ausbildung der Erfindung weist die Montagevorrichtung ein Einstellelement auf, das zur Ausbildung eines Anschlags für das Tragelement in der ersten Stellung dient. Das Einstellelement ist insbesondere weiter als das Tragelement von dem Stützelement beabstandet und am Längselement angeordnet. Die Tragelementschwenkachse ist entlang der Längsrichtung bevorzugt zwischen dem Einstellelement und dem Stützelement angeordnet. Durch das Einstellelement lässt sich der Winkel, um den das Tragelement in der ersten Stellung relativ zur zweiten Stellung verschwenkt ist, bevorzugt einstellen und dadurch die zur Montage nötige Verschwenkung des Tragelementes auf ein optimales Maß einstellen.

Das Einstellelement ist relativ zum Längselement zumindest anteilig parallel zur Längsmittelachse verschieblich gelagert. Insbesondere weist das Einstellelement ein mit dem Außengewinde des Längselementes kämmendes Einstellinnengewinde auf. Hierdurch ist die Lage des Einstellelementes auf einfache Weise veränderlich und lässt sich durch axiale Krafteinflüsse insbesondere nicht beeinflussen.

Bevorzugt weist das Einstellelement entlang der Längsmittelachse zwei sich aneinander anschließende Einstellelementabschnitte auf. Eine zur Längsmittelachse rechtwinklige Querschnittfläche eines ersten Einstellelementabschnittes hat vorzugsweise eine größere Breite als eine zur Längsmittelachse rechtwinklige Querschnittsfläche eines zweiten Einstellelementabschnittes. Die Breite des zweiten Einstellelementabschnittes entspricht insbesondere zumindest im Wesentlichen der Breite der länglichen Ausnehmung des Tragelementes und/oder ist zumindest teilweise in die Ausnehmung einzuführen. Durch diese Ausführung des Einstellelementes lässt sich zum einen der Schwenkwinkel des Tragelementes begrenzen und zum anderen eine unbeabsichtigte Drehung des Einstellelementes verhindern, während das Tragelement in der ersten Stellung angeordnet ist.

Die Aufgabe wird außerdem gelöst durch ein Montagesystem. Das Montagesystem umfasst eine erfindungsgemässe Montagevorrichtung und eine Haltevorrichtung. Die Haltevorrichtung umfasst ein sich länglich in eine Halteelementlängsrichtung erstreckendes Halteelement. Das Halteelement weist zumindest eine Stützfläche zur Anlage des Stützelementes und zumindest eine Halteausnehmung zur Aufnahme des Längselementes auf. Insbesondere weist das Halteelement mehrere in die Halteelementlängsrichtung voneinander beabstandete Halterausnehmungen auf. Die zumindest eine Halteausnehmung ist bezogen auf die Haltelementlängsrichtung insbesondere zumindest im Wesentlichen oder genau mittig zwischen zwei Enden des Halteelementes angeordnet. Im Falle mehrerer Halteausnehmungen sind diese bevorzugt gleichartig ausgebildet. Bei der Anwendung des Montagesystems sind die Halteelementlängsrichtung und die Längsrichtung rechtwinklig zueinander anzuordnen.

Das Halteelement ist insbesondere ein sich flach ersteckendes und/oder metallisches Element, dessen Länge bevorzugt um ein Vielfaches größer ist als seine Breite. Die in die Halteelementlängsrichtung gemessene Länge beträgt bevorzugt zumindest 50, besonders bevorzugt zumindest 60, weiter bevorzugt genau 70 cm. Vorzugsweise beträgt die Dicke 10 mm und die Breite 80 mm. Bevorzugt handelt es sich bei dem Halteelement um ein Flacheisen. Hierdurch ist das Montagesystem insbesondere geeignet zur Montage von Unterbauspülen. Dazu ist das Halteelement derart auf eine Arbeitsplattenausnehmung in einer Arbeitsplatte, unterhalb derer die Unterbauspüle fixiert werden soll, anzuordnen, dass das Halteelement sich quer über die Arbeitsplattenausnehmung erstreckt und mit seinen Enden auf der Arbeitsplatte aufliegt. Anschließend ist das Längselement in die Halteausnehmung einzuführen, das Stützelement auf die Stützfläche aufzulegen und daraufhin die Unterbauspüle als Einrichtungsgegenstand, wie bereits vorbeschrieben, etwa durch eine manuelle Drehung des Stellelementes oberhalb des Stützelementes, anzuheben.

Die Montagevorrichtung und die Haltevorrichtung bilden bevorzugt insofern das Montagesystem aus, als sie gemeinsam zu verwenden sind, jedoch zueinander beweglich und/oder voneinander lösbar ausgebildet sind. Alternativ dazu bilden die Montagevorrichtung und die Haltevorrichtung bevorzugt ein zumindest nicht ohne weiteres trennbares Montagesystem. Vorzugsweise ist hierbei die Längsmittelachse, insbesondere das Längselement, ortsfest relativ zum Halteelement angeordnet und ggf. das Stützelement und/oder das Stellelement einteilig mit dem Halteelement ausgebildet.

Das Halteelement weist bevorzugt ein insbesondere aus Aluminium ausgebildetes Hohlprofil auf oder ist davon ausgebildet. Mit Hohlprofil ist jedes Profil zu bezeichnen, dass kein Vollprofil ist. Das Hohlprofil macht sich den Hohlkammereffekt zu Nutze, der eine gesteigerte Biegesteifigkeit pro Material bedeutet. Vorzugsweise ist das Hohlprofil im Querschnitt insofern geschlossen, als es im Querschnitt einen Hohlraum einschließt. Die Querschnittsfläche des Hohlprofils ist bevorzugt spiegelsymmetrisch ausgebildet. Dadurch lässt sich eine maximale Stabilität erreichen. Durch das Aluminium lässt sich ferner ein geringes Gewicht erreichen.

Das Halteelement hat bevorzugt im Querschnitt eine Erstreckung in eine erste Richtung und eine dazu rechtwinklige zweite Richtung. Die Halteausnehmung erstreckt sich in die erste Richtung durchgängig. Die Erstreckung des Halteelementes in die erste Richtung ist besonders bevorzugt mindestens so groß ist wie die Erstreckung des Halteelementes in die zweite Richtung. Das bedeutet, dass das Halteelement im Anwendungsfall eine Höhe hat, die größer ist als seine Breite. Dadurch ist die relevante Biegesteifigkeit pro Bauraum weiter erhöht.

Die Halteausnehmung ist in einer Draufsicht auf die Stützfläche bevorzugt zumindest im Wesentlichen U- oder C-förmig ausgebildet und zu einer Seite des Halteelementes offen. Die Halteausnehmung ist bevorzugt zumindest im Wesentlichen rechteck- und/oder kanalförmig und erstreckt sich von einer Längsseite des Halteelementes mit einer begrenzten Erstreckung in eine Richtung in das Halteelement, in der dessen Breite gemessen ist. Durch diese Ausbildung der Halteausnehmung lässt sich die Montagevorrichtung einfach von der Haltevorrichtung lösen und dazu variabel positionieren.

Alternativ dazu ist die Halteausnehmung in einer Draufsicht auf die Stützfläche vollumfänglich vom Halteelement, insbesondere vom Hohlprofil, umgeben. Dabei ist die Halteausnehmung insbesondere als Langloch ausgebildet. Dadurch wird eine besonders sichere Abstützung des Stützelementes erreicht. Das Stützelement hat in diesem Fall bevorzugt eine im Betrieb am Halteelement anliegende Kontaktfläche, die in die gleiche Richtung länglich ausgebildet ist wie das Langloch. Hierbei handelt es sich bevorzugt im die Halteelementlängsrichtung.

Vorzugsweise hat das Halteelement zumindest drei Halteausnehmungen, die in die Halteelementlängsrichtung voneinander beabstandet sind. Dabei ist eine erste, insbesondere mittige Halteausnehmung zwischen einer zweiten und einer dritten Halteausnehmung angeordnet und hat zur zweiten Halteausnehmung insbesondere einen geringeren Abstand als zur dritten Halteausnehmung. Durch eine Mehrzahl von Halteausnehmungen lassen sich durch das Montagesystem Unterbauspülen insbesondere mit Doppelbecken montieren, deren Abflussöffnungen unterschiedlich zur Arbeitsplattenausnehmung positioniert sind, ohne dass dazu die Position des Halteelementes relativ zur Arbeitsplattenausnehmung in der Arbeitsplatte verändert werden muss oder dessen Länge vergrößert werden muss. Durch die unterschiedlichen Abstände der zweiten und dritten Halteausnehmung von der ersten ist das Montagesystem nicht nur an drei unterschiedliche Unterbauspülentypen perfekt angepasst, sondern gar an zumindest fünf, da das Halteelement zusätzlich umgedreht und damit gespiegelt verwendet werden kann.

Das Halteelement weist bevorzugt eine der Stützfläche gegenüberliegende Anlagefläche auf, die zumindest teilweise durch ein nachgiebiges Material ausgebildet ist, bevorzugt durch eine Elastomer- oder Textilschicht, besonders bevorzugt durch eine Filzschicht. Das Material ist insbesondere Teil des Halteelementes. Das Material vermeidet ein Zerkratzen der Arbeitsplatte durch das Halteelement.

Bevorzugt ist die Halteelementlängsrichtung horizontal ausgerichtet. Vorzugsweise weist die Haltevorrichtung eine am Halteelement angeordnete Trägervorrichtung mit zumindest einem sich zumindest anteilig vertikal erstreckenden ersten Trägerelement und zumindest eine, bevorzugt zumindest drei Rollen zum Verschieben der Haltevorrichtung auf einem Boden auf. Hierdurch bildet das Montagesystem einen auf dem Boden verschieblichen Montagewagen. Die Haltevorrichtung bzw. das Halteelement und die Trägervorrichtung sind bevorzugt ortsfest zueinander angeordnet.

Durch diesen Aufbau des Montagesystems lässt sich die Montage von Waschbecken an Wänden erleichtern. Diese Waschbecken lassen sich wie vorbeschrieben durch die Montagevorrichtung und die Haltevorrichtung anheben, wobei die Haltevorrichtung sich durch die Trägervorrichtung unmittelbar auf dem Boden abstützt. Anschließend lässt sich das Montagesystem zusammen mit dem Waschbecken auf die Wand zubewegen und das Waschbecken mit sich horizontal erstreckenden Öffnungen auf konventionell zur Montage aus der Wand ragende Gewindezapfen aufschieben.

Die Rollen der Trägervorrichtung spannen eine Fläche auf dem Boden auf, die insbesondere von der Längsmittelachse geschnitten wird. Bevorzugt liegen die Halteausnehmungen bei einer vertikalen Projektion derer innerhalb der Fläche. Insbesondere umfasst die Trägervorrichtung zumindest vier Rollen, die ein Rechteck aufspannen. Das Halteelement ist insbesondere in zumindest einer Konfiguration der Trägervorrichtung um zumindest 50 cm von den Rollen beabstandet, wovon zumindest ein Teil insbesondere um eine vertikale Schwenkachse schwenkbar ist.

Die Trägervorrichtung umfasst bevorzugt zumindest zwei Trägerelemente, die jeweils eine Seite des Halteelementes abstützen. Alternativ umfasst die Trägervorrichtung nur ein Trägerelement, mit dem das Halteelement einen Kragarm ausbildet, wodurch das Montagesystem platzsparender baut. Insbesondere im Falle des Vorhandenseins zweier Trägerelemente weist das Montagesystem bevorzugt zumindest ein sich im Wesentlichen parallel zum Halteelement erstreckendes und zwischen dem Halteelement und der von den Rollen aufgespannten Fläche positioniertes Abstellelement auf. Das Abstellelement dient einer Abstellung des zu montierenden Waschbeckens, bevor die Montagevorrichtung in die Abflussöffnung des Waschbeckens eingeführt ist. Die Erstreckung des Abstellelementes in die Halteelementlängsrichtung und/oder der Abstand der Trägerelemente zueinander ist insbesondere variabel, um das Montagesystem an unterschiedliche Waschbecken und gegebene Bauräume anpassen zu können.

Vorzugsweise ist die Haltevorrichtung derart ausgebildet, dass der Abstand des Halteelementes von den Rollen variabel einstellbar ist. Insbesondere ist die Trägervorrichtung manuell oder automatisch höhenverstellbar. Hierdurch kann wiederum eine Anpassung an unterschiedliche Bedingungen und Waschbecken erreicht werden. Im Falle eines einstellbaren Abstandes des Halteelementes von den Rollen ist eine Höhenverstellbarkeit des Längselementes relativ zum Halteelement nicht weiter unbedingt notwendig. Insofern ist in einer alternativen bevorzugten Ausgestaltung der Erfindung das Längselement ortsfest relativ zum Halteelement angeordnet und gemeinsam mit dem Halteelement höhenverstellbar zur Einführung des Tragelementes durch die Abflussöffnung des zu montierenden Einrichtungsgegenstandes.

Vorzugsweise ermöglicht das Montagesystem ein Einklemmen des zu montierenden Einrichtungsgegenstandes zwischen dem Tragelement und dem Halteelement. Hierdurch wird eine Lagefixierung des Einrichtungsgegenstandes während der Montage erreicht.

Alternativ zum vorbeschriebenen Montagesystem kann ein Montagesystem aus zwei einzelnen und im Bereich der Küchen- und Sanitäreinrichtungsmontage ohnehin anderweitig benutzten Böcken, der Montagevorrichtung und der Haltevorrichtung ausgebildet sein. Die nichtbeanspruchten Böcke sind in einem Abstand zueinander zu positionieren, der nötig ist, um den zu montierenden Einrichtungsgegenstand zwischen ihnen abzulegen. Insbesondere wird der Einrichtungsgegenstand auf einem Abstellelement abgelegt, das wiederum auf den Böcken bzw. Querstreben davon abgelegt ist. Das Abstellelement umschließt insbesondere einen Teil der Böcke, bevorzugt die Querstrebe, zumindest anteilig, vorzugsweise U-förmig und/oder ist längenvariabel. Das Halteelement ist oberhalb des Einrichtungsgegenstandes auf die Böcke aufzulegen. Die Böcke weisen insbesondere jeweils zumindest drei, insbesondere vier Rollen auf, die bevorzugt bremsbar sind.

Weitere Einzelheiten und Vorteile der Erfindung sind den nachfolgend beschriebenen, schematisch dargestellten Ausführungsbeispielen zu entnehmen; Es zeigen:
- Fig. 1: eine erste Ansicht einer ersten erfindungsgemäßen Montagevorrichtung,
- Fig. 2: eine zweite Ansicht der Montagevorrichtung gemäß Fig. 1,
- Fig. 3: eine erste Ansicht einer Haltevorrichtung eines von den Fig. 6 und 7 gezeigten Montagesystems,
- Fig. 4: eine zweite Ansicht der Haltevorrichtung gemäß Fig. 3,
- Fig. 5 bis 7: drei der Ansicht gemäß Fig. 1 entsprechende Ansichten eines ersten erfindungsgemäßen Montagesystems zu unterschiedlichen Zeitpunkten während einer Montage einer Unterbauspüle,
- Fig. 8: eine erste Ansicht eines zweiten erfindungsgemäßen Montagesystems während der Montage eines Waschbeckens,
- Fig. 9: eine weitere Ansicht des Montagesystems gemäß Fig. 8 während der Montage des Waschbeckens,
- Fig. 10: eine perspektivische Ansicht einer weiteren erfindungsgemäßen Montagevorrichtung,
- Fig. 11: eine Detailansicht eines Teils eines dritten erfindungsgemäßen Montagesystems,
- Fig. 12: eine Seitenansicht eines weiteren erfindungsgemäßen Montagesystems,
- Fig. 13: eine Draufsicht des Montagesystems gemäß Fig. 12.

Sofern sinnvoll sind funktional gleichwirkende Teile mit identischen Bezugsziffern versehen.

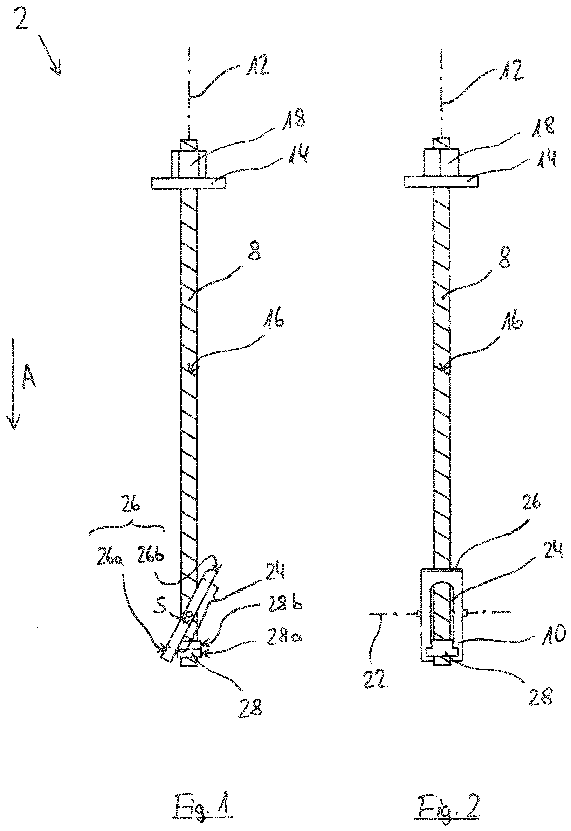

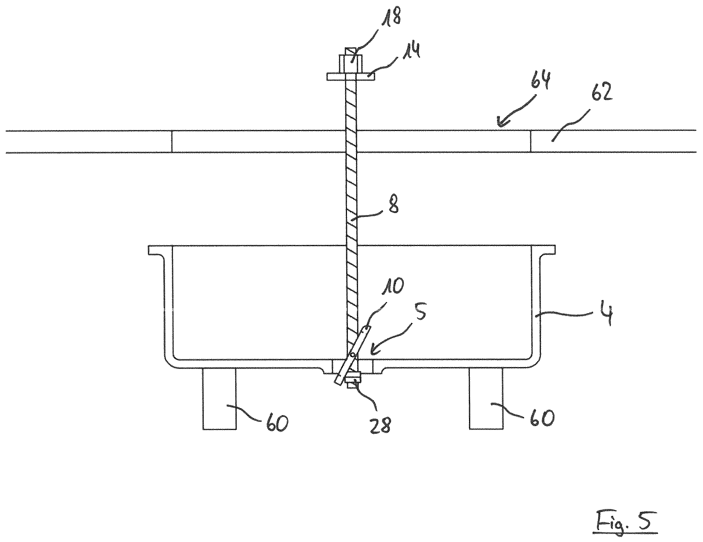

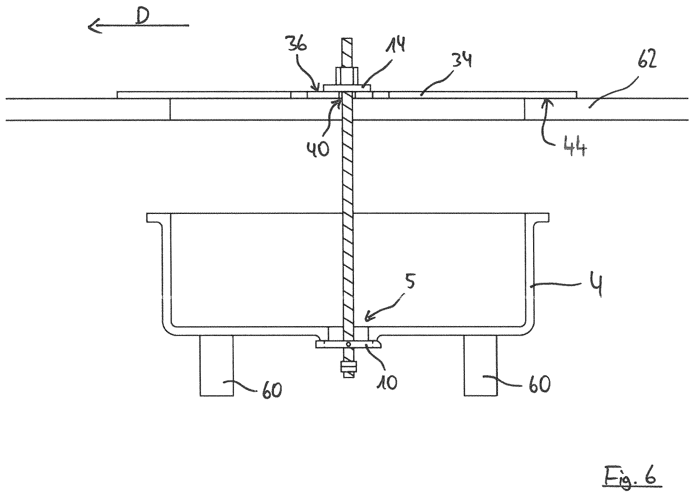

Die Fig. 1 und 2 zeigen eine erste erfindungsgemäße Montagevorrichtung 2 aus zwei zueinander um 90° verschwenkten Perspektiven. Die Montagevorrichtung 2 umfasst ein sich in eine Längsrichtung A länglich erstreckendes Längselement 8. Außerdem umfasst die Montagvorrichtung zwei ein am Längselement 8 angeordnetes Tragelement 10. Das Tragelement 10 ist um eine Tragelementschwenkachse 22 schwenkbar am Längselement 8 gelagert. Das Tragelement 10 ist aus einer ersten Stellung (siehe Fig. 1 und 5) in eine zweite Stellung (siehe Fig. 6 bis 9) überführbar, wobei das Tragelement 10 sich in der zweiten Stellung im Wesentlichen rechtwinklig zu einer Längsmittelachse 12 des Längselementes 8 erstreckt, wohingegen es sich in der ersten Stellung um etwa 20° zur Längsmittelachse 12 angewinkelt erstreckt. In die Längsrichtung A von dem Tragelement 10 beabstandet ist an dem Längselement 8 ein Stützelement 14 angeordnet. Das Stützelement 14 ist relativ zum Längselement 8 in die Längsrichtung 12 verschieblich gelagert. Das Längselement 8 ist als Gewindestange mit einem Außengewinde 16 ausgebildet. Das Stützelement 14 ist als runde Scheibe mit einer mittigen Ausnehmung ausgebildet, durch die sich das Längselement 8 hindurch erstreckt. Der Radius des Stützelementes 14 ist mehr als dreimal so groß wie der Radius des Längselementes 8. Das Stützelement 14 ist aus Polyethylen ausgebildet.

An dem Stützelement 14 anliegend weist die Montagevorrichtung 2 ein Stellelement 18 auf, das eine Ausnehmung mit einem Stellinnengewinde aufweist, das mit dem Außengewinde 16 des Längselementes 8 kämmt. Das Stellelement 18 bildet äußerlich einen metrischen Sechskant, so dass das Stützelement 14 in die Längsrichtung A verschoben werden kann, indem das Stellelement 18 mittels eines gängigen Schraubenschlüssels gedreht wird.

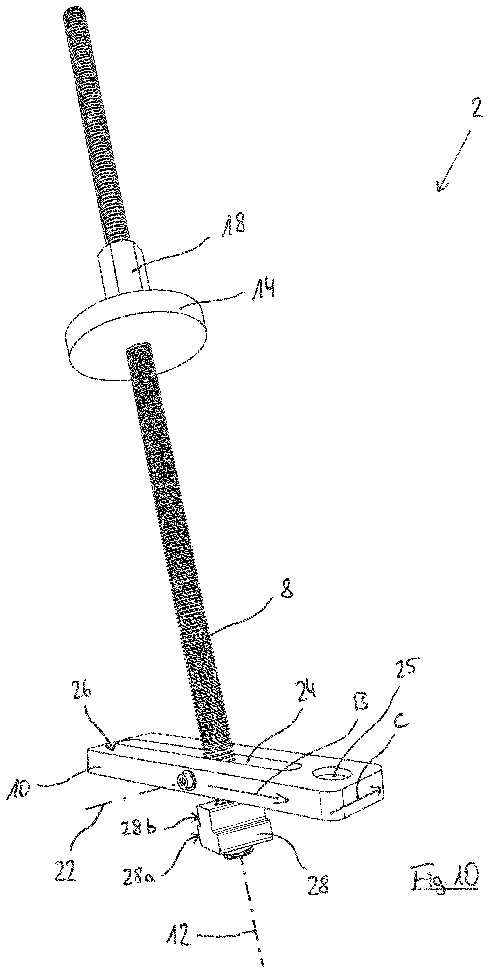

Das Tragelement 10 hat einen Schwerpunkt S, der sowohl von der Tragelementschwenkachse 22 als auch von der Längsmittelachse 12 beabstandet ist (siehe Fig. 1), wodurch sich das Tragelement 10 bei Ausbleiben externer Kräfte und einer Anordnung des Längselementes 8 gemäß Fig. 1 automatisch in der ersten Stellung anordnet. Das Tragelement 10 ist länglich ausgebildet. **In** der zweiten Stellung ist seine Erstreckung in eine zur Tragelementschwenkachse 22 rechtwinklige erste Richtung B mindestens doppelt so groß wie seine Erstreckung in eine zur Tragelementschwenkachse 22 parallele zweite Richtung C (siehe Fig. 10). Das Tragelement 10 weist eine sich in die erste Richtung B erstreckende, längliche Ausnehmung 24 auf. Die Ausnehmung 24 ist ein Langloch, das durch das Längselement 8 durchdrungen wird.

Das Tragelement hat auf seiner Oberseite eine Kontaktfläche 26, die bei Anwendung der Montagevorrichtung 2 zeitweise am Einrichtungsgegenstand 4 anliegt. Die Kontaktfläche 26 ist vollflächig durch eine Filzschicht ausgebildet. Die Kontaktfläche 26 weist einen sich in der zweiten Stellung zur Längsmittelachse 12 rechtwinklig erstreckenden, ebenen ersten Kontaktflächenabschnitt 26a und einen sich in der zweiten Stellung parallel zur Längsmittelachse 12 erstreckenden, ebenen zweiten Kontaktflächenabschnitt 26b auf. Zwischen dem ersten Kontaktflächenabschnitt 26a und dem zweiten Kontaktflächenabschnitt 26b weist die Kontaktfläche 26 einen gekrümmten Oberflächenabschnitt dar, der einen kantenfreien Übergang zwischen den Kontaktflächenabschnitten 26a und 26b schafft.

Die Montagevorrichtung 2 weist ferner ein Einstellelement 28 zur Ausbildung eines Anschlags für das Tragelement 10 in der ersten Stellung auf. Das Einstellelement 28 ist weiter als das Tragelement 10 von dem Stützelement 14 beabstandet am Längselement 8 angeordnet. Das Einstellelement 28 hat ein mit dem Außengewinde 16 des Längselementes 8 kämmendes Einstellinnengewinde, durch das die Position des Einstellelementes 28 entlang der Längsachse 12 variierbar ist. Das Einstellelement 28 hat zwei sich aneinander anschließende Einstellelementabschnitte 28a, 28b. Eine zur Längsmittelachse 12 rechtwinklige Querschnittsfläche eines ersten Einstellelementabschnittes 28a hat eine größere Breite als eine zur Längsmittelachse 12 rechtwinklige Querschnittsfläche eines zweiten Einstellelementabschnittes 28b. Der zweite Einstellelementabschnitt 28b ist in der ersten Stellung des Tragelementes 10 insbesondere in seiner Ausnehmung 24 teilweise eingeführt.

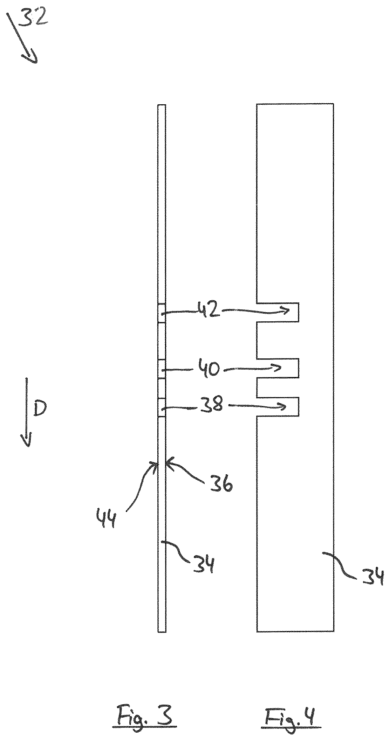

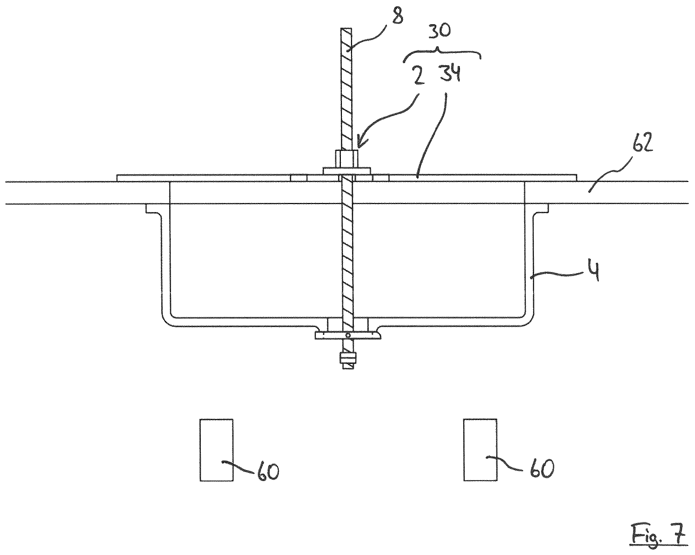

Die Fig. 6 und 7 zeigen ein erstes erfindungsgemäßes Montagesystem 30 aus der vorbeschriebenen Montagevorrichtung 2 und einer Haltevorrichtung 32, die hier aus einem Halteelement 34 besteht. Der Aufbau des Halteelementes 34 wird durch die Fig. 3 und 4 verdeutlicht. Das Halteelement 34 erstreckt sich länglich in eine Halteelementlängsrichtung D und hat eine Breite, die deutlich geringer als seine Länge, jedoch deutlich größer als seine Dicke ist. Das Halteelement 34 hat eine Stützfläche 36 und eine gegenüberliegende Anlagefläche 44. Außerdem weist das Halteelement 34 drei Halteausnehmungen 38, 40, 42 auf, die in die Halteelementlängsrichtung D voneinander beabstandet sind. Dabei ist eine mittlere erste Halteausnehmung 40 von einer zweiten Halteausnehmung 38 weniger weit beabstandet als von einer dritten Halteausnehmung 42. Die Ausnehmungen sind gemäß Fig. 4 jeweils U-förmig ausgebildet.

Die Fig. 5 bis 7 verdeutlichen die Anwendung des ersten erfindungsgemäßen Montagesystems. Zunächst wird die Montagevorrichtung mit dem Tragelement in der ersten Stellung von oben durch eine Abflussöffnung 5 einer zu montierenden Unterbauspüle 4 geführt. Dabei liegt die Unterbauspüle 4 unterhalb einer Arbeitsplattenausnehmung 64 einer Arbeitsplatte 62 auf zwei schematisch dargestellten, beispielhaften Auflageelementen 60 auf. Nachdem das Tragelement 10 vollständig durch die Abflussöffnung 5 hindurchgeführt ist, wird es aus der ersten Stellung in die in Fig. 6 gezeigte, zweite Stellung verschwenkt. Dazu gleitet das Tragelement 10 mit seiner Kontaktfläche an einer Unterseite der Unterbauspüle 4 entlang, wobei die Unterbauspüle 4 zunächst Kontakt zum zweiten Kontaktflächenabschnitt 26b hat und bis zum ersten Kontaktflächenabschnitt 26a an der Kontaktfläche 26 entlanggleitet. Oberhalb der Arbeitsplattenausnehmung 64 wird derweil das Halteelement mittig positioniert und liegt mit der Anlagefläche 44 auf Rändern der Arbeitsplatte 62 auf. Da die Abflussöffnung 5 mittig unterhalb der Arbeitsplattenausnehmung 64 bleiben soll, wird das Längselement 8 in die erste Halteausnehmung geführt und das Stützelement 14 auf die Stützfläche 16 des Halteelementes 34 aufgelegt. Um anschließend die Unterbauspüle 4 anzuheben, ist das Stellelement 18 mittels eines Schraubenschlüssels zu drehen und dadurch das Längselement 8 mit dem Tragelement 10 und der darauf aufliegenden Unterbauspüle 4 relativ zum Stützelement 14, zum Halteelement 34 und zur Arbeitsplatte 62 bis in die in Fig. 7 gezeigte Position anzuheben.

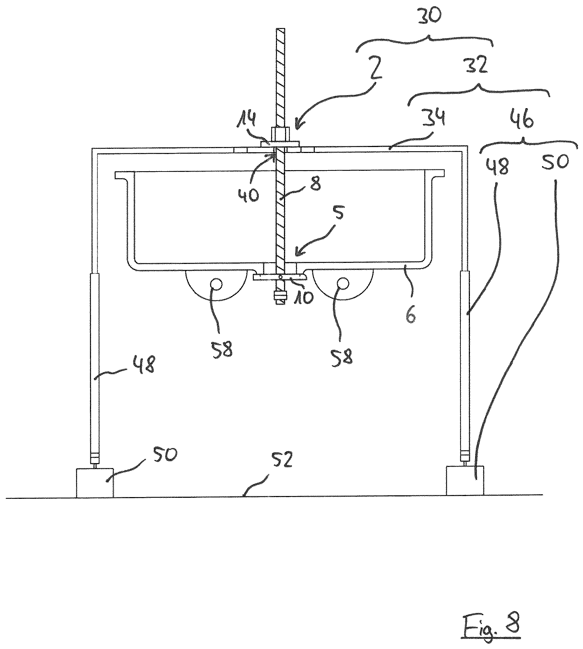

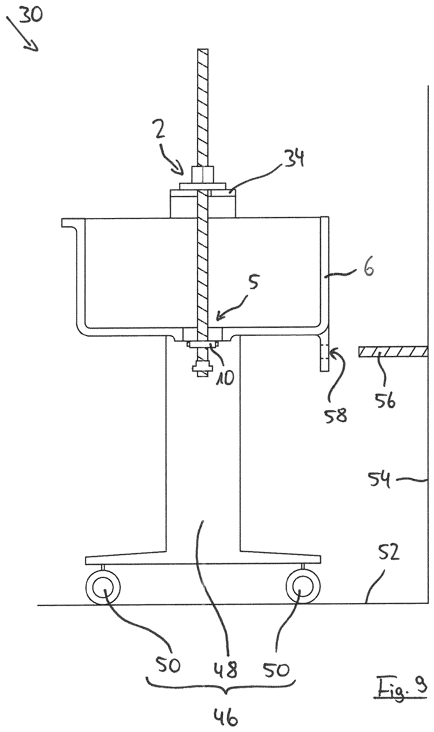

Die Fig. 8 und 9 zeigen ein weiteres erfindungsgemäßes Montagesystem mit einer abweichenden Haltevorrichtung 32. Die hier gezeigte Haltevorrichtung 32 weist neben dem Halteelement 34 eine Trägervorrichtung 46 mit zwei sich im Wesentlichen vertikal erstreckenden Trägerelementen 48 und vier Rollen 50 zum Verschieben der Haltevorrichtung 32 auf einem Boden 52 auf. Das in den Fig. 8 und 9 gezeigte Montagesystem 30 dient der Montage von Waschbecken insbesondere in Bädern. Die Haltevorrichtung 32 ist oberhalb des zu montierenden Waschbeckens 6 zu positionieren und das Waschbecken 6 mittels der Montagevorrichtung 2 relativ zur Haltevorrichtung 32 anzuheben (siehe oben). Anschließend ist das Waschbecken 6 auf aus einer Wand 54 ragende Montagezapfen 56 zuzuschieben und die Montagezapfen 56 durch Ausnehmungen 58 des Waschbeckens 6 zu führen.

Fig. 10 zeigt eine alternative Montagevorrichtung 2, deren Einstellelement 28, Stellelement 18 und Stützelement 14 wie bei der Montagevorrichtung 2 gemäß den Fig. 1 und 2 ausgebildet sind. Das Tragelement 10 ist zwar wie das in den Fig. 1 und 2 gezeigte Tragelement 10 gelagert, weist jedoch neben der Ausnehmung 24, insbesondere gegenüberliegend vom Kontaktflächenabschnitt 26b, eine weitere Bohrung 25 auf.

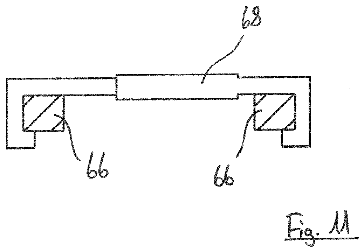

Fig. 11 zeigt geschnittene Querstreben 66 zweier unterschiedlicher Böcke, die ein alternatives, nicht im Ganzen dargestelltes Montagesystem 30 ausbilden. Zum Ablegen des nicht dargestellten, zu montierenden Einrichtungsgegenstandes 4, 6 ist an den Querstreben 66 ein sich hauptsächlich quer erstreckendes Abstellelement 68 angeordnet. Das Abstellelement 68 umschließt die Querstreben 66 aus der gegebenen Perspektive jeweils U-förmig und ist längenvariabel, um auch bei unterschiedlichen Abständen der Böcke zueinander eine zuverlässige Abstellung des Einrichtungsgegenstandes zu ermöglichen.

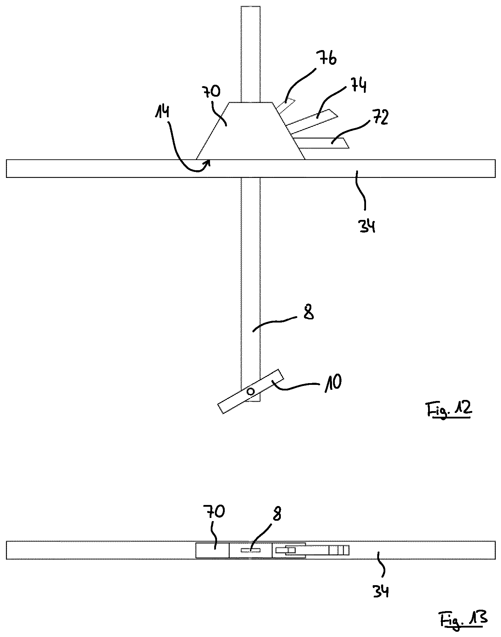

Die Fig. 12 und 13 zeigen ein weiteres Montagesystem 30. Dieses weist eine zu einer Klemmung des Längselementes 8, das einen rechteckigen Querschnitt hat, ausgebildete Stellvorrichtung als Teil der Montagevorrichtung 2 auf. Die Stellvorrichtung umfasst ein Stellvorrichtungsgehäuse 70, das einstückig mit dem Stützelement 14 ausgebildet ist. Die Stellvorrichtung weist einen unbeweglichen Haltegriff 72 und einen schwenkbar am Stellvorrichtungsgehäuse 70 angeordneten, ersten Betätigungsgriff 74 auf. Die Stellvorrichtung ist derart ausgebildet, dass durch eine Verschwenkung des ersten Betätigungsgriffes 74 relativ zum Stellvorrichtungsgehäuse 70 eine Verschiebung des Stützelementes 14 relativ zum Längselement 8 in seine Längsrichtung A zu erreichen ist. Ferner ist die Stellvorrichtung derart ausgebildet, dass bei einer Rückverschwenkung des ersten Betätigungsgriffes 74 oder dessen Stillstand zumindest eine Verschiebung entgegen der Längsrichtung A verhindert wird. Das gilt so lange, wie ein zweiter Betätigungsgriff 76 der Stellvorrichtung nicht betätigt wird. Mit seiner Betätigung ist eine Verschieblichkeit des Stützelementes 14 relativ zum Längselement 8 entgegen der Längsrichtung A oder eine freie Verschieblichkeit freizugeben.

Das Halteelement 34 ist von einem Hohlprofil aus Aluminium gebildet. Die Höhe des Halteelementes 34 entspricht dabei seiner Breite. Das Halteelement 34 weist eine nicht sichtbare, längliche Halteausnehmung auf, durch die sich das Längselement 8 erstreckt, an dem das Tragelement 10 schwenkbar angeordnet ist.

## Patentansprüche

1. Montagevorrichtung (2) zur Montage von Einrichtungsgegenständen (4, 6), umfassend ein sich in eine Längsrichtung (A) länglich erstreckendes Längselement (8), ein am Längselement (8) angeordnetes und von einer ersten Stellung relativ zum Längselement (8) in eine zweite Stellung überführbares Tragelement (10), wobei das Tragelement (10) sich in der zweiten Stellung von einer Längsmittelachse (12) des Längselementes (8) aus weiter radial wegerstreckt als in der ersten Stellung, und ein in die Längsrichtung (A) von dem Tragelement (10) beabstandet an dem Längselement (8) angeordnetes Stützelement (14), das relativ zum Längselement (8) zumindest anteilig in die Längsrichtung (12) verschieblich gelagert ist, wobei das Tragelement (10) einen Schwerpunkt (S) hat, der von der Tragelementschwenkachse (22) und von der Längsmittelachse (12) beabstandet ist, **dadurch gekennzeichnet, dass** das Tragelement (10) um eine Tragelementschwenkachse (22) schwenkbar am Längselement (8) gelagert ist.

2. Montagevorrichtung nach einem der vorhergehenden Ansprüche, **dadurch gekennzeichnet, dass** das Tragelement (10) das Längselement (8) auf zwei gegenüberliegenden Seiten dessen umgibt und insbesondere eine sich in der zweiten Stellung rechtwinklig zur Tragelementschwenkachse (22) länglich erstreckende Ausnehmung (24) aufweist, durch die sich das Längselement (8) hindurcherstreckt.

3. Montagevorrichtung nach einem der vorhergehenden Ansprüche, **gekennzeichnet durch** eine zwischen dem Längselement (8) und dem Stützelement (14) angeordnete Stellvorrichtung, die zur Verschiebung des Stützelementes (14) relativ zum Längselement (8) in die Längsrichtung (A) ausgebildet ist, die insbesondere frei von einer Rotation des Stützelementes (14) und/oder der Stellvorrichtung relativ zum Längselement (8) ist.

4. Montagevorrichtung nach Anspruch 3, **dadurch gekennzeichnet, dass** die Stellvorrichtung zu einer lösbaren formschlüssigen oder kraftschlüssigen Festlegung, insbesondere Klemmung, des Längselementes (8) ausgebildet ist und insbesondere zumindest zwei im Betrieb zur Festlegung gegenüberliegend am Längselement anliegende Kontaktelemente aufweist.

5. Montagevorrichtung nach Anspruch 3 oder 4, **dadurch gekennzeichnet, dass** die Stellvorrichtung ein Stellvorrichtungsgehäuse (70), insbesondere mit einem ersten Haltegriff (72), und einen beweglich, insbesondere schwenkbar um eine zur Längsmittelachse (12) bevorzugt angewinkelte oder windschiefe Handgriffschwenkachse, am Stellvorrichtungsgehäuse (70) gelagerten ersten Betätigungsgriff (74) aufweist, wobei die Stellvorrichtung derart ausgebildet ist, dass eine Bewegung des ersten Betätigungsgriffes (74) relativ zum Stellvorrichtungsgehäuse (70) im Betrieb die Verschiebung des Stützelementes (14) relativ zum Längselement (8) bewirkt.

6. Montagevorrichtung nach Anspruch 5, **dadurch gekennzeichnet, dass** die Stellvorrichtung einen weiteren Betätigungsgriff (76) aufweist, der derart ausgebildet ist, dass seine Bewegung relativ zum Stellvorrichtungsgehäuse (70) eine Verschieblichkeit des Stützelementes (14) relativ zum Längselement (8) entgegen der Längsrichtung (A) freigibt.

7. Montagevorrichtung nach einem der vorhergehenden Ansprüche, **dadurch gekennzeichnet, dass** das Stützelement (14) zumindest teilweise aus einem Kunststoff, bevorzugt aus einem thermoplastischen Kunststoff, besonders bevorzugt aus Polyethylen oder Polyoxymethylen ausgebildet ist.

8. Montagesystem (30) umfassend eine Montagevorrichtung (2) nach einem der vorhergehenden Ansprüche und eine Haltevorrichtung (32) mit einem sich länglich in eine Halteelementlängsrichtung (D) erstreckenden Halteelement (34), das zumindest eine Stützfläche (36) zur Anlage des Stützelementes (14) und zumindest eine Halteausnehmung (38, 40, 42), insbesondere mehrere in die Halteelementlängsrichtung (D) voneinander beabstandete Halteausnehmungen (38, 40, 42) zur Aufnahme des Längselementes (8) aufweist.

9. Montagesystem nach Anspruch 8, **dadurch gekennzeichnet, dass** das Halteelement (34) ein insbesondere aus Aluminium ausgebildetes Hohlprofil aufweist oder davon ausgebildet ist, dessen Querschnittsfläche bevorzugt spiegelsymmetrisch ausgebildet ist.

10. Montagesystem nach Anspruch 8 oder 9, **dadurch gekennzeichnet, dass** das Halteelement (34) im Querschnitt eine Erstreckung in eine erste Richtung und eine dazu rechtwinklige zweite Richtung hat, wobei sich die Halteausnehmung (38, 40, 42) in die erste Richtung durchgängig erstreckt und die Erstreckung des Halteelementes (34) in die erste Richtung mindestens so groß ist wie die Erstreckung in die zweite Richtung.

11. Montagesystem nach einem der Ansprüche 8 bis 10, **dadurch gekennzeichnet, dass** die Halteausnehmung (38, 40, 42) in einer Draufsicht auf die Stützfläche (36) zumindest im Wesentlichen U- oder C-förmig ausgebildet und zu einer Seite des Halteelementes (34) offen ist.

12. Montagesystem nach Anspruch 10 oder 11, **dadurch gekennzeichnet, dass** die Halteausnehmung in einer Draufsicht auf die Stützfläche (36) vollumfänglich vom Halteelement (34), insbesondere vom Hohlprofil, umgeben ist, wobei die Halteausnehmung insbesondere als Langloch ausgebildet ist.

13. Montagesystem nach einem der Ansprüche 8 bis 12, **dadurch gekennzeichnet, dass** das Halteelement (34) zumindest drei in die Halteelementlängsrichtung (D) voneinander beabstandete Halteausnehmungen (38, 40, 42) aufweist, wobei eine erste Halteausnehmung (40) zwischen einer zweiten und einer dritten Halteausnehmung (38, 42) angeordnet ist und zur zweiten Halteausnehmung (38) einen geringeren Abstand hat als zur dritten Halteausnehmung (42).

14. Montagesystem nach einem der Ansprüche 8 bis 13, **dadurch gekennzeichnet, dass** die Halteelementlängsrichtung (D) horizontal ausgerichtet ist und die Haltevorrichtung (32) eine am Halteelement (34) angeordnete Trägervorrichtung (46) mit zumindest einem sich zumindest anteilig vertikal erstreckenden ersten Trägerelement (48) und zumindest eine, bevorzugt zumindest drei Rollen (50) zum Verschieben der Haltevorrichtung (32) auf einem Boden (52) aufweist.

## Claims

1. Mounting device (2) for mounting furnishings (4, 6), comprising a longitudinal element (8) extending longitudinally in a longitudinal direction (A), a carrying element (10) arranged on the longitudinal element (8) and transferable from a first position relative to the longitudinal element (8) to a second position, wherein the carrying element (10) extends further radially away from a longitudinal central axis (12) of the longitudinal element (8) in the second position than in the first position, and a support element (14) arranged on the longitudinal element (8) at a distance from the carrying element (10) in the longitudinal direction (A), which support element (14) is mounted so as to be displaceable relative to the longitudinal element (8) at least partially in the longitudinal direction (12), **characterized in that** the carrying element (10) is pivotably mounted on the longitudinal element (8) about a carrying element pivot axis (22), wherein the carrying element (10) has a center of gravity (S) which is spaced apart from the carrying element pivot axis (22) and from the longitudinal central axis (12).

2. Mounting device according to one of the preceding claims, **characterized in that** the carrying element (10) surrounds the longitudinal element (8) on two opposite sides thereof and in particular has a recess (24) extending longitudinally at right angles to the carrying element pivot axis (22) in the second position, through which the longitudinal element (8) extends.

3. Mounting device according to one of the preceding claims, **characterized by** an actuating device arranged between the longitudinal element (8) and the support element (14), which actuating device is designed for displacing the support element (14) relative to the longitudinal element (8) in the longitudinal direction (A), which is in particular free from rotation of the support element (14) and/or the actuating device relative to the longitudinal element (8).

4. Mounting device according to claim 3, **characterized in that** the actuating device is designed for a releasable form-fitting or force-fitting fixing, in particular clamping, of the longitudinal element (8) and in particular has at least two contact elements lying opposite each other on the longitudinal element for fixing during operation.

5. Mounting device according to claim 3 or 4, **characterized in that** the actuating device has an actuating device housing (70), in particular with a first handle (72), and a first actuating handle (74) mounted on the actuating device housing (70) in a manner movable, in particular pivotable about a handle pivot axis which is preferably angled or skew to the longitudinal central axis (12), wherein the actuating device is designed such that a movement of the first actuating handle (74) relative to the actuating device housing (70) during operation causes the displacement of the support element (14) relative to the longitudinal element (8).

6. Mounting device according to claim 5, **characterized in that** the actuating device has a further actuating handle (76) which is designed in such a way that its movement relative to the actuating device housing (70) releases a displacement of the support element (14) relative to the longitudinal element (8) against the longitudinal direction (A).

7. Mounting device according to one of the preceding claims, **characterized in that** the support element (14) is at least partially made of a plastic, preferably a thermoplastic, particularly preferably polyethylene or polyoxymethylene.

8. Mounting system (30) comprising a mounting device (2) according to one of the preceding claims and a retaining device (32) with a retaining element (34) extending longitudinally in a retaining element longitudinal direction (D), which retaining element (34) has at least one support surface (36) for supporting the support element (14) and at least one retaining recess (38, 40, 42), in particular a plurality of retaining recesses (38, 40, 42) spaced apart from each other in the retaining element longitudinal direction (D) for receiving the longitudinal element (8).

9. Mounting system according to claim 8, **characterized in that** the retaining element (34) has a hollow profile, in particular made of aluminium, or is formed therefrom, the cross-sectional area of which hollow profile is preferably designed to be mirror-symmetrical.

10. Mounting system according to claim 8 or 9, **characterized in that** the retaining element (34) has in cross-section an extension in a first direction and a second direction at right angles thereto, wherein the retaining recess (38, 40, 42) extends continuously in the first direction and the extension of the retaining element (34) in the first direction is at least as large as the extension in the second direction.

11. Mounting system according to one of claims 8 to 10, **characterized in that** the retaining recess (38, 40, 42) is at least substantially U-shaped or C-shaped in a plan view of the support surface (36) and is open to one side of the retaining element (34).

12. Mounting system according to claim 10 or 11, **characterized in that** the retaining recess is completely surrounded by the retaining element (34), in particular by the hollow profile, in a plan view of the support surface (36), wherein the retaining recess is in particular designed as an elongated hole.

13. Mounting system according to one of claims 8 to 12, **characterized in that** the retaining element (34) has at least three retaining recesses (38, 40, 42) spaced apart from each other in the retaining element longitudinal direction (D), wherein a first retaining recess (40) is arranged between a second and a third retaining recess (38, 42) and has a smaller distance to the second retaining recess (38) than to the third retaining recess (42).

14. Mounting system according to one of claims 8 to 13, **characterized in that** the retaining element longitudinal direction (D) is oriented horizontally and the retaining device (32) has a carrier device (46) arranged on the retaining element (34) with at least one first carrier element (48) extending at least partially vertically and at least one, preferably at least three rollers (50) for displacing the retaining device (32) on a floor (52).

## Revendications

1. Dispositif de montage (2) pour le montage d'objets d'ameublement (4, 6), comprenant un élément longitudinal (8) s'étendant longitudinalement dans une direction longitudinale (A), un élément de support (10) disposé sur l'élément longitudinal (8) et pouvant être transféré d'une première position par rapport à l'élément longitudinal (8) dans une deuxième position, l'élément de support (10) s'étendant, dans la deuxième position, davantage radialement en partant d'un axe médian longitudinal (12) de l'élément longitudinal (8) que dans la première position, et un élément d'appui (14) disposé sur l'élément longitudinal (8) à distance de l'élément de support (10) dans la direction longitudinale (A), qui est monté de manière à pouvoir coulisser au moins proportionnellement dans la direction longitudinale (12) par rapport à l'élément longitudinal (8), l'élément de support (10) présentant un centre de gravité (S) qui est espacé de l'axe de pivotement (22) d'élément de support et de l'axe médian longitudinal (12), **caractérisé en ce que** l'élément de support (10) est monté sur l'élément longitudinal (8) de manière à pouvoir pivoter autour d'un axe de pivotement (22) d'élément de support.

2. Dispositif de montage selon l'une des revendications précédentes, **caractérisé en ce que** l'élément de support (10) entoure l'élément longitudinal (8) sur deux côtés opposés de celui-ci et comporte en particulier un évidement (24) s'étendant en longueur à angle droit par rapport à l'axe de pivotement (22) d'élément de support dans la deuxième position, à travers lequel s'étend l'élément longitudinal (8).

3. Dispositif de montage selon l'une des revendications précédentes, **caractérisé par** un dispositif de réglage disposé entre l'élément longitudinal (8) et l'élément d'appui (14), qui est réalisé pour le coulissement l'élément d'appui (14) par rapport à l'élément longitudinal (8) dans la direction longitudinale (A), qui est en particulier sans rotation de l'élément d'appui (14) et/ou du dispositif de réglage par rapport à l'élément longitudinal (8).

4. Dispositif de montage selon la revendication 3, **caractérisé en ce que** le dispositif de réglage est réalisé pour une fixation amovible par complémentarité de forme ou à force, en particulier par serrage, de l'élément longitudinal (8) et comporte en particulier au moins deux éléments de contact reposant, en fonctionnement, en vis-à-vis sur l'élément longitudinal pour la fixation.

5. Dispositif de montage selon la revendication 3 ou 4, **caractérisé en ce que** le dispositif de réglage comporte un boîtier (70) de dispositif de réglage, en particulier avec une première poignée (72), et une première poignée d'actionnement (74) montée sur le boîtier (70) de dispositif de réglage de manière mobile, en particulier de manière à pouvoir pivoter autour d'un axe de pivotement de poignée de manière préférée coudé ou incliné par rapport à l'axe médian longitudinal (12), le dispositif de réglage étant réalisé de telle manière qu'un déplacement de la première poignée d'actionnement (74) par rapport au boîtier (70) de dispositif de réglage entraîne lors du fonctionnement le coulissement de l'élément d'appui (14) par rapport à l'élément longitudinal (8).

6. Dispositif de montage selon la revendication 5, **caractérisé en ce que** le dispositif de réglage comporte une autre poignée d'actionnement (76), qui est réalisée de telle manière que son déplacement par rapport au boîtier (70) de dispositif de réglage libère une capacité de coulissement de l'élément d'appui (14) par rapport à l'élément longitudinal (8) dans le sens opposé à la direction longitudinale (A).

7. Dispositif de montage selon l'une des revendications précédentes, **caractérisé en ce que** l'élément d'appui (14) est réalisé au moins en partie à partir d'une matière plastique, de manière préférée d'une matière thermoplastique, de manière particulièrement préférée de polyéthylène ou de polyoxyméthylène.

8. Système de montage (30) comprenant un dispositif de montage (2) selon l'une des revendications précédentes et un dispositif de maintien (32) avec un élément de maintien (34) s'étendant en longueur dans une direction longitudinale (D) d'élément de maintien, qui comporte au moins une surface d'appui (36) pour l'appui de l'élément d'appui (14) et au moins un évidement de maintien (38, 40, 42), en particulier plusieurs évidements de maintien (38, 40, 42) espacés les uns des autres dans la direction longitudinale (D) d'élément de maintien, destinés à recevoir l'élément longitudinal (8).

9. Système de montage selon la revendication 8, **caractérisé en ce que** l'élément de maintien (34) comporte un profilé creux en particulier en aluminium ou en est formé, dont la surface de section transversale est de manière préférée symétrique en miroir.

10. Système de montage selon la revendication 8 ou 9, **caractérisé en ce que** l'élément de maintien (34) a dans la section transversale une extension dans une première direction et une deuxième direction perpendiculaire à celle-ci, l'évidement de maintien (38, 40, 42) s'étendant en continu dans la première direction et l'étendue de l'élément de maintien (34) dans la première direction étant au moins aussi grande que l'extension dans la deuxième direction.

11. Système de montage selon l'une des revendications 8 à 10, **caractérisé en ce que** l'évidement de maintien (38, 40, 42) est réalisé au moins sensiblement avec une forme de U ou de C, vu en plan de la surface d'appui (36), et est ouvert vers un côté de l'élément de maintien (34).

12. Système de montage selon la revendication 10 ou 11, **caractérisé en ce que** l'évidement de maintien est entouré sur toute la périphérie par l'élément de maintien (34), en particulier par le profilé creux, dans une vue en plan de la surface d'appui (36), l'évidement de maintien étant réalisé en particulier sous la forme d'un trou oblong.

13. Système de montage selon l'une des revendications 8 à 12, **caractérisé en ce que** l'élément de maintien (34) comporte au moins trois évidements de maintien (38, 40, 42) espacés les uns des autres dans la direction longitudinale (D) d'élément de maintien, un premier évidement de maintien (40) étant disposé entre un deuxième et un troisième évidement de maintien (38, 42) et ayant une distance par rapport au deuxième évidement de maintien (38) inférieure à celle par rapport au troisième évidement de maintien (42).

14. Système de montage selon l'une des revendications 8 à 13, **caractérisé en ce que** la direction longitudinale (D) d'élément de maintien est orientée horizontalement et le dispositif de maintien (32) comporte un dispositif de support (46) disposé sur l'élément de maintien (34) avec au moins un premier élément de support (48) s'étendant au moins proportionnellement verticalement et au moins un, de manière préférée au moins trois rouleaux (50) pour faire coulisser le dispositif de maintien (32) sur un sol (52).
